# EUROPEAN PATENT APPLICATION

(11) **EP 1 504 707 A1**
(43) Date of publication of application: **09.02.2005**
(21) Application number: 04254763.8
(22) Date of filing: 06.08.2004
(51) Int. Cl.: A47J 42/08

(54) **Adjustment mechanism for grinders of grindable food materials**

(30) Priority: 07.08.2003 NZ 52745003
(71) Applicant: Click Clack Limited, Palmerston North 5301 (NZ)
(72) Inventor: Heng, John Montgomery, Palmerston North (NZ); Sinn, Stefanie Elisabeth, Palmerston North (NZ); Sands, Norman, Palmerston North (NZ)
(74) Representative: Hitchcock, Esmond Antony

(57) **Abstract**

A grinder for grindable food materials such as salt and peppercorns. The grinder (10) has a body (11) which contains first and second grinder elements (15 and 17). The grinder elements have opposed grinding surfaces (16 and 18), between which grindable material can pass to be ground or milled when relative rotation therebetween occurs. This relative movement is caused by handle (13) driving shaft (14) connected to grinding element (15). An adjustment mechanism to adjust the distance between the grinding surfaces is included. The adjustment mechanism has a connector (30) which connects element (15) to the grinder body (22). Rotating the connector (30) by knob (35) causes the distance between the grinding surfaces (16 and 18) to be adjustably altered.

## Description

### BACKGROUND TO THE INVENTION

This invention relates to an adjustment mechanism for grinders of grindable food material. The invention is particular relevant to grinders for the grinding/milling of peppercorns, salt crystals, spices and the like.

Grinders (whether manually or electrically operated) for peppercorns and salt crystals are known. Such grinders normally include a grinding mechanism, which can comprise a pair of grinding elements mounted so that relative movement therebetween can occur. The grinding elements are configured and arranged so that opposed grinding surfaces are spaced apart. Peppercorns/salt crystals can enter into the space between the grinding surfaces such that the relative movement between the grinding surfaces applies a grinding action. As a result the size of the peppercorns/salt crystals is reduced so that the ground material can then pass from the grinding mechanism.

Thus, for example, with a manual grinder of this type the grinding mechanism is located in a lower part of the grinder. One of the grinding elements is fixed in place and the other grinding element is moveable by a suitable movement mechanism. Typically this will comprise a knob or the like which can be gripped in one hand of the user. The user can thus apply a rotating motion to the knob and this movement is transmitted by way of a shaft through to the moveable grinding element. The user thus holds the grinder over the area to which the ground material is to be applied and apply the required movement to the knob, normally actioned by two hands.

A known problem with this type of grinder concerns adjustment of the space between the grinding surfaces. The adjustment of the distance between the surfaces adjusts the extent to which the material is ground. For example, the user may require either a fine or coarse grind or something in between.

With known manual grinders the shaft extends through the knob and is fixed thereto by a threaded "nut". By adjusting the position of the nut along the shaft the moveable grinding element is caused to move toward or away from the fixed grinding element. This thereby adjusts the space between the grinding surfaces. Such an adjustment is not always easy to carry out or convenient to the user. In addition torque from the shaft can be imparted to the adjustment nut whereby the nut "self adjusts". This results in the grinder going "out of adjustment" thereby necessitating the user to readjust in order to achieve the correct level of grind.

### SUMMARY OF THE INVENTION

It is therefore an object of the present invention to provide an adjustment mechanism for the grinding elements of a grinder intended to grind or mill grindable food materials whereby the grinding elements can be readily adjusted and will remain in an adjusted position.

Broadly according to one aspect of the present invention there is provided a grinder for grindable food materials, the grinder including a body, first and second grinder elements, drive means, the first and second grinder elements each having a grinding surface, the grinding surfaces being opposed and between which grindable material can pass to be ground or milled when relative rotation therebetween is caused to occur by use of the drive means, the grinder being characterised by an adjustment mechanism to adjust the distance between the grinding surfaces said adjustment mechanism including a connector connecting one of the grinder elements to the grinder body and adjustment means for adjustably moving the connector to cause the distance between the grinding surfaces to be adjustably altered.

### BRIEF DESCRIPTION OF THE DRAWINGS

In the following more detailed description of a preferred embodiment of the present invention reference will be made to the accompanying drawings in which:-
Figure 1 is an elevation view of a grinder for grindable materials, the grinder incorporating an adjustment mechanism according to the present invention,
Figure 2 is a partially exploded view of the grinder as shown in Figure 1,
Figure 3 is a partial view of the grinder shown in Figures 1 and 2 when in an inverted position and showing in more detail the adjustment mechanism,
Figure 4 is a view similar to Figure 3 but showing the adjustment mechanism in a different adjustment position,
Figure 5 is a further view of the arrangement shown in Figure 3 but with an external cover piece of the adjustment mechanism removed,
Figure 6 is a view similar to Figure 5 but showing the adjustment mechanism in the position shown in Figure 4,
Figure 7 is an elevation view of the grinder with the adjustment mechanism cover piece removed and the adjustment being in the position of Figures 3 and 5,
Figure 8 is a view similar to Figure 7 but showing the adjustment mechanism in the position of Figures 4 and 6,
Figure 9 is a view similar to Figure 6 but with the body of the grinder removed and,
Figure 10 is a perspective view of a helical the element of the connector of the adjustment mechanism.

### DETAILED DESCRIPTION OF A PREFERRED EMBODIMENT OF THE INVENTION

The manual grinder for the grinding of grindable material such as peppercorns and salt crystals as shown in the accompanying drawings is of the type described and claimed in U.S. patent application NO. 20040069881. This is only by way of example as the adjustment mechanism according to the present invention can be incorporated in other types of manual grinders.

It will be appreciated by those skilled in the art, after reading the following disclosure, that when the adjustment mechanism according to the present invention is used in such a manual grinder there is no requirement to provide a means of longitudinal adjustment relative to an operating knob or the like of a shaft extending from the knob to the moveable element of the grinding mechanism.

The means by which the grinding/milling movement of the grinding elements is achieved is not an essential part of the present invention. It will therefore not be described in detail herein. However, in respect of the manual grinder as depicted in the drawings reference is made to the disclosure of U.S. patent specification No. 20040069881 the content of which is incorporated herein by way of specific reference.

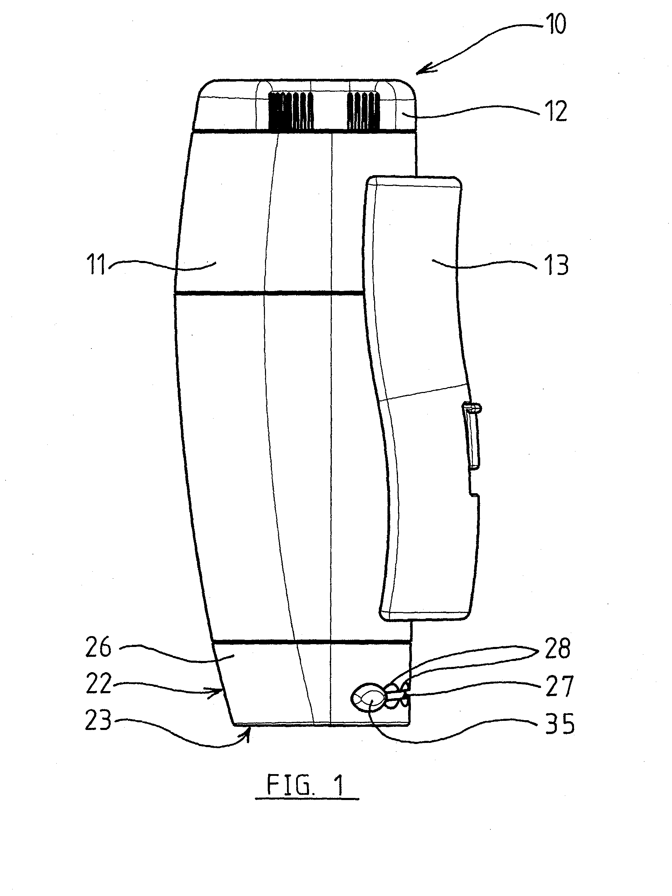

The manual grinder 10 as shown in Figure 1 includes a body 11 and filler cap 12 at the top and thereof. An operating handle 13 is provided. A user can apply a squeezing action to the handle 13. The handle, via a rack and pinion mechanism applies a rotational movement to a shaft 14 located within the body 10. The rotational movement is about a longitudinal axis of shaft 14. The shaft 14 is connected to a moveable element 15 of the grinder mechanism.

The moveable grinder element 15 includes a grinding surface 16 which locates opposite a grinding surface 18 of a fixed grinding element 17 the like of which can be found in grinding elements sold under the CrushGrind brand by Ideas A/S of Copenhagen, Denmark. The fixed grinding element 17 provides in its upper part a tapering throat 19 whereby peppercorns, salt crystals or the like, loaded into body 11 via an opening covered by cover 12, can pass into the space which exists between grinding surface 16 and 18.

In a preferred form of the invention the grinding elements 15 and 17 include a ratchet mechanism 20 so that the shaft 14 can apply a movement of first grinding element 15 relative to second grinding element 17 when the handle 13 is squeezed towards the body 11. However, upon the handle 13 being released thereby rotating the shaft in an opposite direction no driving effect is applied to the first grinding element 15. As a result the first grinding element 15 always moves relative to the fixed grinding element 17 in one direction of rotation. The grinding elements and ratchet can be of the type sold under the CrushGrind brand.

The lower end of body 11 is provided with a threaded wall 21. On to this is threaded an end cover 22 which also functions as a component of the adjustment mechanism. Other mounting arrangements such as a snap fit connection could equally be used.

The cover 22 is configured to provide a dispensing opening 23 whereby peppercorns/salt crystals ground by the grinding mechanism 15/17 can dispense from the grinder 10.

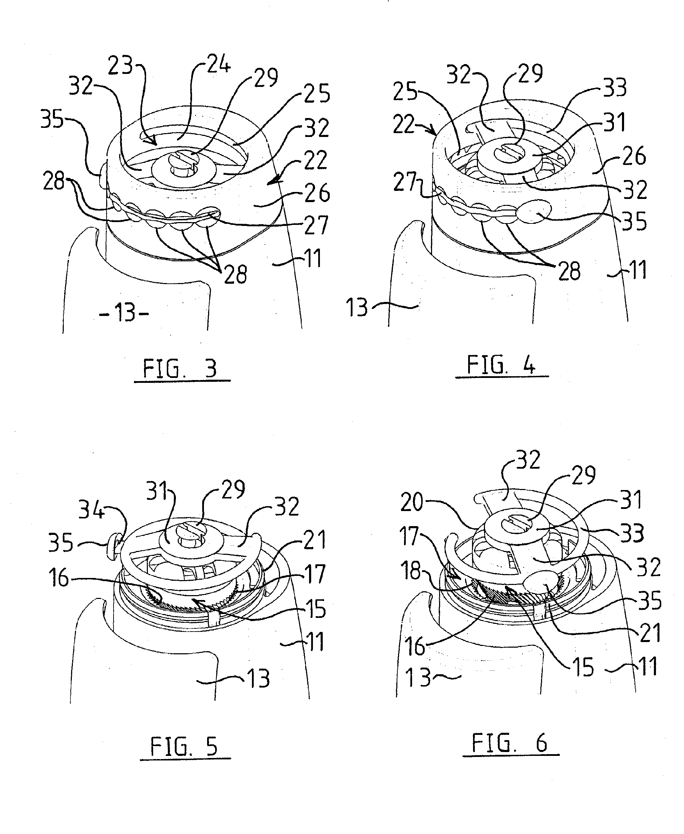

The inner wall 24 of the cover 22, which defines at least in part the opening 23, incorporates a guide for the connector 30. Preferably the guide is a helical shaped groove 25. Preferably the groove is of curved cross-section. In the outer wall 26 of the cover 22 is formed a slot 27 which extends partially around the periphery thereof. Slot 27 also has a helical form commensurate with and opening into the groove 25. As can be seen more clearly in Figures 3 and 4 a series of indentations 28 are formed in the external surface of wall 26. The indentations 28 are spaced along the length of the slot 27.

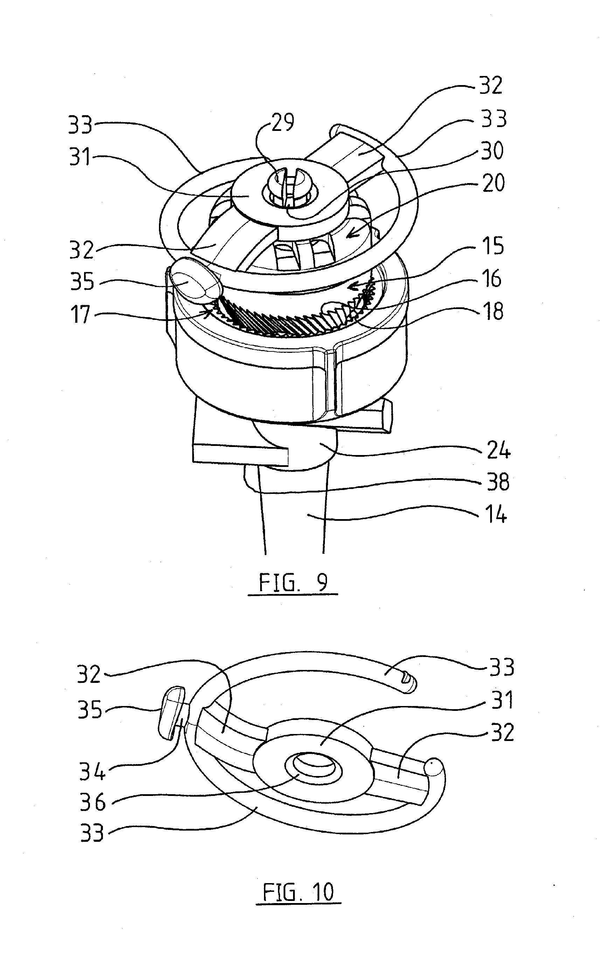

A helical connector element 30, as shown in Figure 10, locates within the opening 23 of the end cover 22. The connector element 30 comprises a hub 31 from which radiates a pair of spokes 32. These spokes 32 are coupled to a rim 33, which extends in a helical manner the same as the helical groove within the end cover 22. As a consequence of this angular disposition of the spokes 32 relative to the hub 31 are different in order to accommodate the helical form of the rim 33.

Extending from the rim 33 adjacent the spoke 32 which is at the greater angle relative to the hub 31 is a manipulator which preferably is a spigot 34. A knob 35 is arranged to engage on the distal end of spigot 34. An opening 36 in the hub 31 enables the hub 31 to be engaged over a free end 29 of the shaft 24 (see for example Figures 3 and 5).

The connector element 30 is assembled into the end cap 22 so that the rim 33 (which preferably has a curved profile) slidingly engages in the helical groove 25. The spigot 34 engages through the slot 27. The knob 35 is then installed on the spigot 34. The end cap 22 can then be screwed onto the body 11 by way of thread 21 (there being a corresponding female thread on the inside of the cap 22). The distal end of the shaft 29 extends through opening 36 in hub 31.

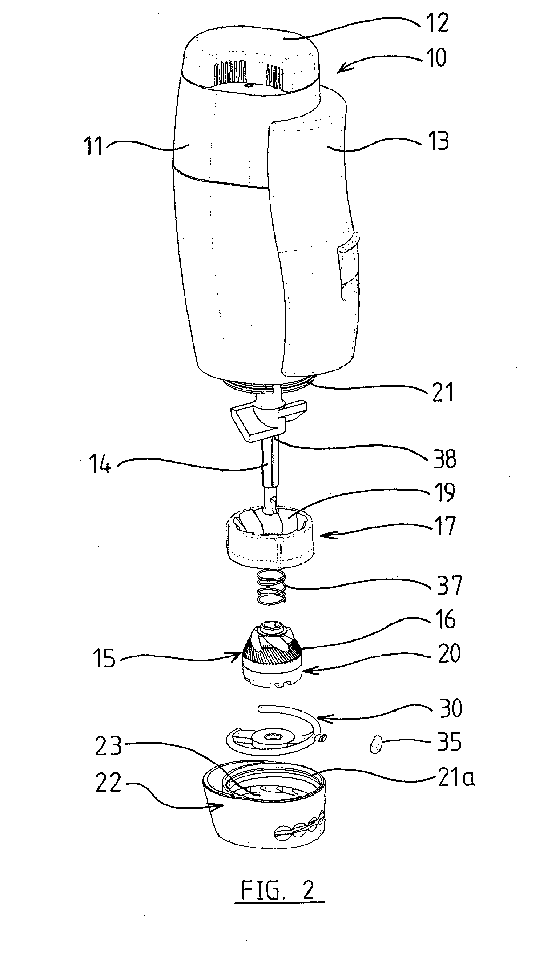

Referring back to Figure 2 it will be seen that a spring 37 is engaged between the first grinding element 15 and a shoulder 38 on the shaft 14. The spring 37 biases the grinding element 15 so that grinding element 15 to move axially away from the shoulder 38. The extent to which the first grinding element 15 will be biased i.e. moved away from the shoulder 38, is controlled by engagement of the hub 31 against the first grinding element 15.

By moving the spigot 34 (via knob 35) along the slot 27, the position of the boss 31 relative to the longitudinal length of the shaft end 29 can be adjusted. This is due to the helical groove 25 and helical form connector 30 causing the boss 31 to be displaced axially relative to the axis of shaft 14. In the drawings Figures 3 and 4 show the knob 35 at the extreme ends of the slot 27.

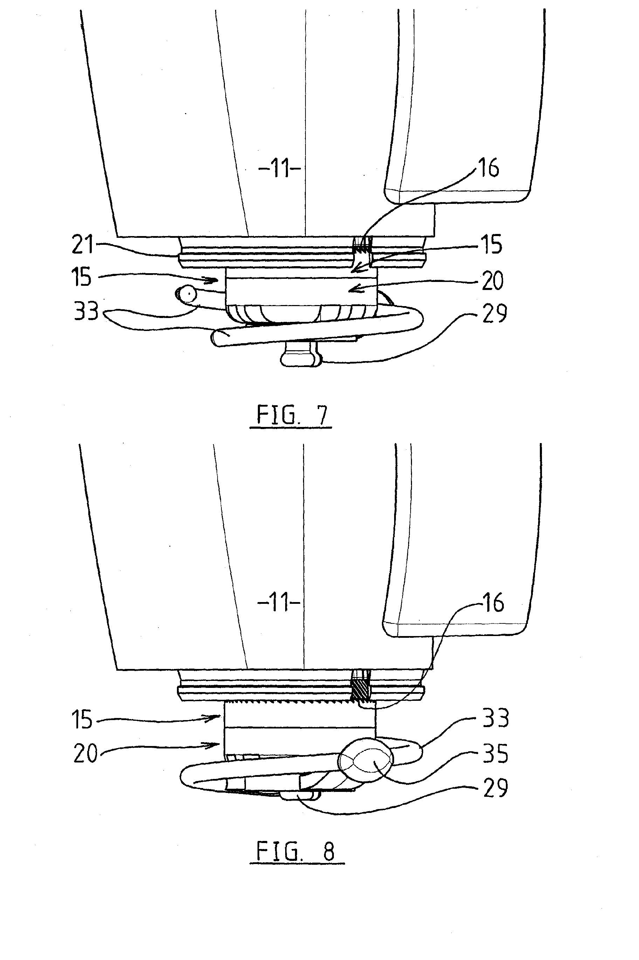

Figures 3, 5 and 7 show the knob 35 positioned where the first grinding element 15 is forced, against the action of spring 37, closer to the shoulder 38. The result of this is a lessening of the gap between the grinding surfaces 16 and 18. This, therefore, provides, in use, the finest grind.

Figures 4, 6 and 8, however, show the adjustment mechanism when the first grinding element 15 is permitted under the action of spring 37 to move to its greatest extent away from the shoulder 38. The effect is creation of a greater gap between the grinding surfaces 16 and 18 (see Figure 6). Therefore, in this configuration the coarsest grind would be achievable during use of the grinder.

The indentations 28 in wall 26 along the slot 27 enable the knob 35 to be moved to positions between the extremes shown in Figure 3 and 4. Consequently grinds between the extreme of finest and coarsest can be achieved depending on where the knob 35 is located. The indentations help keep the connector element 30 in its adjusted position.

In use, therefore, a user would simply apply a tangential pressure to knob 35 to thereby move the knob to the position representing the desired "grind" size. If at any time a different grind size is required the user simply adjusts the position of the knob 35. Accordingly, the adjuster mechanism enables a user to very easily and readily make an adjustment to the degree of grind applied to the peppercorn/salt crystals.

According to the present invention the adjuster mechanism enables the grind to be adjusted by a mechanism which is independent of how a drive is applied to the shaft connected to the first grinding element. Therefore the problem, which typically arises with known grinders whereby the adjustment is achieved at the point where the shaft is connected to the operating knob, cannot occur. Any torque which is created as a consequence of the shaft being driven to create the grinding action will not, with the present invention, cause the adjusting mechanism to "self adjust".

The adjustment mechanism of the invention also overcomes the risk of jamming of the grinding surfaces together on fine adjustment.

It will be appreciated by those skilled in the art that the present invention is open to modification and therefore the embodiment of the invention as shown and described herein is by way of example only. For example, other mechanical means of achieving adjustable axial adjustment of the position of the moveable grinding element relative to the fixed grinding element at the outlet end of the grinder can be employed.

One such arrangement, but less preferred, could be achieved by the pair of spokes 32 being provided at their distal ends (relative to the hub 31) with spigots which engage through slots in the wall of the adjuster cover 22. The configuration and orientation of the slots would be such that the position of the hub 31 relative to the longitudinal axis of the end 29 of the shaft 24 could be adjusted by sliding the spigots up or down the slots depending on the type of grind required. Some means such as knobs on the spigots fitting in indentations could be used in order to anchor the connector element in its adjusted position.

Other configurations will be apparent to those skilled in the art. However, it is believed that the adjuster mechanism as described herein is to be preferred as the construction provides for suitable degrees of adjustments, i.e. from one adjusted position to the next, as well as an arrangement where inherently the adjusting mechanism remains in its adjusted position.

## Claims

1. A grinder for grindable food materials, the grinder (10) including a body (11.12), first and second grinder elements (15,17), a drive mechanism (13,14), the first and second grinder elements (15,17) each having a grinding surface (16,19), the grinding surfaces being opposed and between which grindable material can pass to be ground or milled when relative rotation therebetween is caused to occur by use of the drive mechanism (13,14), the grinder (10) being **characterised by** an adjustment mechanism to adjust the distance between the grinding surfaces (16,19)said adjustment mechanism including a connector (30) connecting one of the grinder elements (15) to the grinder body (22)and adjustment means (23,25)for adjustably moving the connector (30) to cause the distance between the grinding surfaces (16,19) to be adjustably altered, the adjustment mechanism having a manipulator (34, 35) accessible from the exterior of the body (22) to effect movement of the connector.

2. A grinder as claimed in claim 1 wherein the connector (30) includes a hub (31) engaged with said one of the grinder elements (15) a rim (33) of helical form, said rim being slidingly engaged with a guide (25) within the body (22), said rim being coupled to the hub (31) by a plurality of spokes (32).

3. The grinder as claimed in 1 wherein the adjustment mechanism includes a rim (33) of helical form, the rim being slidingly engaged with a guide (25) within the body (22), the manipulator (34,35) being coupled to the rim (22), and engaged in a slot (27) which extends from the guide (25) through a wall of the body (22) to open externally of the body.

4. The grinder as claimed in claim 3 wherein the manipulator is a spigot (34) which projects through the slot (27), a knob (35) being coupled to the distal end of the spigot (34).

5. The grinder as claimed in claim 4 wherein spaced apart indentations (28) are formed in the wall of the body (22) adjacent the slot (27), said knob (35) being engageable in a selected of the indentations (28) to retain the rim in an adjusted position.

6. The grinder as claimed in claim 5 wherein the connector (30) is located in a removable body section (22).

7. The grinder as claimed in claim 6 wherein the removable body section (22) incorporates an outlet (23) through which, in use, ground food material can issue from the body (11).

8. The grinder as claimed in any one of claims 3 to 8 wherein the guide (25) is a groove of curved cross-section and engaged therein is a curved profile of the rim (33).

9. The grinder as claimed in any one of claims 1 to 13 wherein said one of the grinder elements (15) is biased by a biasing element (37) into contact with the connector (30) the biasing element being a spring (37) located between a fixture (38) on a shaft (14), which forms part of the drive mechanism, and said one of the grinder elements (15) the shaft (14) extending through said one of the grinder elements (15) and engaged at a distal end thereof with the connector (30).

10. In a condiment grinder having first and second grinder elements (15,17) where the first grinder element (15) is movable toward and away from the second grinder element (17) to adjust the distance between opposing grinding surfaces (16,18) thereof and an adjustment mechanism to adjust said distance **characterised in that** that the adjustment mechanism includes a connector (30) engageable with said first grinder element (15), the connector (30) being engaged with part (22) of the structure of the grinder (10) and retained by a guide (25) to be movable to cause the first grinder element (15) to be adjustable in position to adjust said distance between the opposed grinding surfaces (16,18) the connector (30) including a rim (33) of helical form, the rim (33) being slidingly engaged with said guide (25) and a manipulator (34,35) coupled to the connector (30) and being accessible from externally of said part of the structure (22) the part of the structure being a removable body section (22), said body section (22) having a slot (27) in the wall (26) extending from the guide (25) through the wall to open externally of the body section (22), said slot (27) extending at least in part along the length of the guide (25).

11. An adjustment mechanism as claimed in claim 10 wherein spaced apart indentations (28) are formed in the wall (26) of the body section (22) adjacent the slot (27), a part (35) of the manipulator being engageable in a selected of the indentations (28) to retain the rim (33) in an adjusted position along the guide (25).
